# EUROPÄISCHE PATENTSCHRIFT

(11) **EP 0 576 897 B1**
(45) Veröffentlichungstag und Bekanntmachung des Hinweises auf die Patenterteilung: **28.02.1996**
(21) Anmeldenummer: 93109525.1
(22) Anmeldetag: 15.06.1993
(51) Int. Cl.: B60K 28/04

(54) **Antreibbares Fahrzeug mit einem Sicherheitsschalter**
Motor vehicle with a safety switch
Véhicule motorisé avec un interrupteur de sécurité

(30) Priorität: 24.06.1992 US 903420
(43) Veröffentlichungstag der Anmeldung: 05.01.1994
(73) Patentinhaber: DEERE & COMPANY, Moline, Illinois 61265 (US)
(72) Erfinder: Peterson, Rudolph Andrew, Jr., Horicon, Wisconsin 53032 (US); Cinnamon, James Jury, Horicon, Wisconsin 53032 (US)
(74) Vertreter: Feldmann, Bernhard

(56) Entgegenhaltungen:
- EP-A- 0 448 281
- US-A- 4 294 327
- US-A- 4 381 042
- US-A- 4 651 018
- US-A- 5 103 951

## Beschreibung

Die Erfindung bezieht sich auf ein antreibbares Fahrzeug mit einer elektrisch einrückbaren Kupplung zum Einschalten mindestens eines vom Fahrzeugmotor aus antreibbaren Abtriebes, einer Stromquelle und mit einem Stromquelle und Kupplung miteinander verbindenden Verriegelungskreis, wobei der Verriegelungskreis einen Sicherheitsschalter, der bei Abwesenheit eines Fahrers öffnet und den Fahrzeugmotor selbsttätig ausschaltet, einem zwischen einer Betriebs- und einer Ausstellung verstellbaren ersten Schalter, der in seiner Betriebsstellung einen Fahrbetrieb unterbindet, einen zweiten zwischen einer Betriebsstellung und einer Ausstellung verstellbaren Schalter, der in seiner Betriebsstellung eine Stromversorgung der elektrisch einrückbaren Kupplung erlaubt, und mindestens einen Relaisschalter aufweist.

Derartige Fahrzeuge (US-A-4 317 500) sind in der Regel in Form von Kleinschleppern ausgebildet, die vornehmlich in der Rasen- und Grundstückspflege eingesetzt werden. Sie haben wenigstens einen Abtrieb, zumeist in Form einer Zapfwelle, zum Antreiben eines anzuschließenden Gerätes. Sie sind mit vielerlei Sicherheitsvorkehrungen ausgestattet, die darin bestehen können, daß das Fahrzeug nicht angelassen werden kann, wenn sich das Getriebe in einer Schaltstellung befindet. Bei dem eingangs berücksichtigten Fahrzeug kann das Fahrzeug nur angelassen werden, wenn sich der Getriebeschalthebel in der Neutralstellung befindet. Außerdem muß sich ein Schalter für den Antrieb der Zapfwelle in seiner ausgeschalteten Stellung befinden. Ferner ist ein Sicherheitsschalter in Form eines Sitzschalters vorgesehen, der bewirkt, daß das Fahrzeug nur in Betrieb genommen werden kann, wenn sich eine Bedienungsperson auf dem Fahrersitz befindet. Verläßt sie den Fahrersitz, dann schaltet sich der Motor eines solchen Fahrzeuges automatisch ab und damit auch der Antrieb für die Zapfwelle. Die Zapfwelle kann dadurch nicht im Stand des Fahrzeuges betrieben werden, wenn sich die Bedienungsperson nicht mehr auf dem Fahrersitz aufhält.

Andererseits ist es bei Fahrzeugen, die sich automatisch abstellen, wenn der Sitz verlassen wird, bekannt (US-A-4 509 614), den Sitz in einer Stellung festzusetzen, in der der Fahrzeugmotor weiterlaufen kann.

Es ist auch nicht mehr neu (US-A-5 103 951), einen Sicherheitsschalter zu überbrücken, wenn sich der Fahrer nicht auf dem Sitz befindet und wenn ein Abtrieb stationär betrieben werden soll. Hierzu ist ein elektrischer Schaltkreis vorgesehen, über den im Normalbetrieb die Brennstoffzufuhr für den Verbrennungsmotor des Fahrzeuges abgestellt wird, wenn der Fahrer den Sitz verläßt. Das Fahrzeug selbst ist mit einer vorderen, einer mittigen und einer rückwärtigen Zapfwelle ausgestattet, und der Schaltkreis ist derart ausgebildet, daß die rückwärtige Zapfwelle bei stationärem Fahrzeug betrieben werden kann. Hierzu ist der Schaltkreis mit einem Zapfwellenschalter, der geschlossen ist, wenn keine Zapfwelle eingeschaltet ist, einem Getriebeschalter, der nur geschlossen ist, wenn sich das Getriebe in einer Neutralstellung befindet, einem Sitzschalter, der bei sich nicht auf dem Sitz befindlichen Fahrer sich öffnet, einem Relaisschalter für die Brennstoffzufuhr und mit einem Haltekreis versehen, über den der Spulenausgang des Relaisschalters, der bei geschlossenem Sitzschalter über den Sitzschalter an Masse anliegt, über eine zusätzliche Leitung geerdet werden kann. Der Haltekreis ist nicht aktivierbar, wenn der Getriebeschalter offen ist, oder wenn sich eine Bedienungsperson auf dem Sitz befindet. Der Haltekreis kann aber nur aktiviert werden, wenn ein Rückstellschalter kurzzeitig eingeschaltet wird und wenn ein Parkbremsschalter und Zapfwellenwählschalter sich in ihren geschlossenen Positionen befinden.

Das Fahrzeug kann gestartet werden, wenn der Getriebeschalter und der Zapfwellenschalter geschlossen sind, gleichgültig, ob sich eine Bedienungsperson auf dem Fahrersitz befindet oder nicht. Bei stationärem Betrieb kann die rückwärtige Zapfwelle bei offenem Zapfwellenschalter betrieben werden, wenn der Fahrer den sich am Armaturenbrett befindlichen Rückstellschalter gedrückt hält, bis er sich von seinem Sitz erhoben hat. Wird dies nicht genutzt oder verstreicht nach dem Erheben von dem Sitz mehr als eine halbe Sekunde, bevor der Rückstellschalter betätigt wird, so schaltet sich der Motor selbsttätig aus. Ob eine Zapfwellenkupplung mechanisch oder elektrisch eingeschaltet wird, ist in diesem Dokument nicht offenbart. In jedem Fall ist ein Speisekreis für eine Zapfwellenkupplung nicht vorhanden. Aus Sicherheitsgründen erscheint es bedenklich, daß theoretisch eine Zapfwelle stationär betrieben werden kann, ohne daß vorher die Zapfwellenkupplung ausgeschaltet wurde. Der Rückstellschalter ist ein zusätzliches Bauteil, das am Armaturenbrett vorzusehen ist. Es kann zur Verwirrung beitragen.

Die der Erfindung zugrunde liegende Aufgabe wird darin gesehen, den Abtrieb unter bestimmten vorzugebenden Bedingungen einschalten zu können oder eingeschaltet zu lassen, wenn sich der Fahrer nicht auf seinem Fahrerplatz befindet. Hierzu sieht die Erfindung vor, daß an die Kupplung ein zweiter Abtrieb angeschlossen ist und daß in den Verriegelungskreis ein Modul integriert ist, wobei die Verdrahtung derart ist, daß bei sich in seiner Betriebsstellung befindlichen ersten Schalter und abgeschalteten zweiten Abtrieb und offenem Sicherheitsschalter der Sicherheitsschalter überbrückt wird, so daß der Fahrzeugmotor weiter läuft, und daß für einen Betrieb des ersten Antriebes bei offenem Sicherheitsschalter der zweite Schalter zuerst in seine Ausstellung und danach in seine Betriebsstellung verstellt wird. Auf diese Weise kann, wenn der Fahrer seinen Fahrerplatz verläßt, der Abtrieb nur weiterlaufen, wenn sich das Fahrzeug im Stillstand befindet, nicht ungewollt angefahren oder fortrollen kann. Eine Blockierung des Sicherheitsschalters in seiner Betriebsstellung, in der sämtliche Bedienungs- und Fahrfunktionen erhalten bleiben und ein unbeabsichtigtes Anfahren des Fahrzeuges möglich wäre, wird durch die Überbrückung des beim Verlassen in seine Ausstellung sich automatisch schaltenden Sicherheitsschalters erreicht. Normalerweise ist an einem Abtrieb ein zapfwellengetriebenes Gerät ständig angeschlossen, das im Stillstand des Fahrzeuges nicht betrieben werden soll. Nach der Erfindung ist deshalb der eine Abtrieb bei sich nicht in seiner Betriebsstellung befindlichem Sicherheitsschalter antreibbar, wenn der andere Abtrieb ausgeschaltet ist und bleibt.

Für ihren Betrieb haben derartige Fahrzeuge einen Zündstromkreis, dessen Primärkreis den ersten und den zweiten Schalter, den Sicherheitsschalter und ein erstes elektromagnetisches Relais aufweist, weshalb nach der Erfindung ferner vorgeschlagen wird, daß der Sicherheitsschalter in dem Steuerstromkreis des ersten Relais vorgesehen ist, das einen zweiten den Sicherheitsschalter überbrückenden Steuerstromkreis aufweist. Befindet sich der Sicherheitsschalter in seiner Betriebsstellung, kann das Relais anziehen und der Primärkreis ist stromführend. Betätigt die Bedienungsperson den Sicherheitsschalter nicht mehr, wenn sie zum Beispiel ihren Fahrerplatz verläßt, dann stellt sich der Motor und damit auch der Antrieb automatisch ab. Soll nun doch der Antrieb wieder eingeschaltet werden oder weiterlaufen, muß zumindest eine Vorsichtsmaßnahme ergriffen werden, die darin besteht, daß der erste Schalter in eine Stellung verstellt wird, in der das Fahrzeug nicht mehr bewegt werden kann. Danach kann der zweite Steuerkreis den Sicherheitsschalter überbrücken. Im ganzen wird damit in einfacher Weise der Primärkreis etwas erweitert, um die Überbrückung zu bewerkstelligen.

Im einzelnen sieht die Erfindung hierzu vor, daß der zweite Steuerstromkreis mit einem zweiten Relais versehen ist, das bei Anwesenheit des Fahrers den zweiten Steuerstromkreis des ersten Relais unterbricht und dessen Steuerstromkreis stromabwärts des Sicherheitsschalters an den ersten Steuerstromkreis des ersten Relais angeschlossen ist. Damit wird der zweite Steuerkreis nur stromführend, wenn die Bedienungsperson beispielsweise den Fahrerplatz verläßt, da das zweite Relais mit dem Sicherheitsschalter entsprechend verknüpft ist.

Zweckmäßig ist der Sicherheitsschalter als einpoliger Sitzschalter ausgebildet, dessen Ausgang mit dem Steuerstromkreis des zweiten Relais verbunden ist. Damit kann der Sicherheitsschalter nur eine Betriebsstellung einnehmen, wenn sich ein Fahrer auf dem Fahrersitz befindet. In diesem Zustand ist auch das zweite Relais angezogen und der zweite Steuerstromkreis des ersten Relais ist unterbrochen, so daß er nicht zur Wirkung kommt.

Der erste und der zweite Abtrieb können über einen einzigen Hebel wahlweise einrückbar sein. Beide Abtriebe können aber auch gleichzeitig eingerückt sein, wenn der Sicherheitsschalter nicht überbrückt werden soll.

Aus Sicherheitsgründen sollte mit dem ersten Abtrieb, der eine Zapfwelle sein kann, nur bei sich nicht auf dem Fahrersitz befindlicher Bedienungsperson gearbeitet werden können, wenn das Fahrzeug geparkt ist, weshalb der erste Schalter als Bremsschalter ausgebildet sein kann, wobei der zweite Steuerstromkreis des ersten Relais nur in der Betriebsstellung des ersten Schalters Strom führend ist, so daß der Sicherheitsschalter nicht überbrückbar ist, wenn sich der Getriebeschalthebel nicht in seiner Parkstellung befindet.

In einfacher Weise wird ein Betrieb des ersten Abtriebes bei sich nicht auf dem Fahrerplatz befindlicher Bedienungsperson und bei eingeschaltetem zweiten Abtrieb dadurch vermieden, daß dem Hebel zum Einrücken des zweiten Abtriebes ein Schalter zugeordnet ist, der im eingerückten Zustand den zweiten Steuerstromkreis des ersten Relais unterbricht, wozu im zweiten Steuerstromkreis für das erste Relais ein drittes Relais vorgesehen ist, dessen Steuerstromkreis an den über den Hebel betätigbaren Schalter angeschlossen ist.

Schließlich kann nach der Erfindung noch vorgesehen sein, daß das erste Relais einen dritten Steuerstromkreis aufweist, der nur Strom führend ist, wenn sich der erste Schalter in seiner Betriebsstellung und der zweite Schalter in seiner Ausstellung befindet. Diese Maßnahme ermöglicht es, daß der erste Abtrieb bei sich nicht auf dem Fahrersitz befindlicher Bedienungsperson eingeschaltet werden kann, auch dann, wenn das Fahrzeug zunächst angelassen werden muß, da der dritte Steuerstromkreis auch zu dem Steuerstromkreis für ein Starterrelais im Starterstromkreis führt.

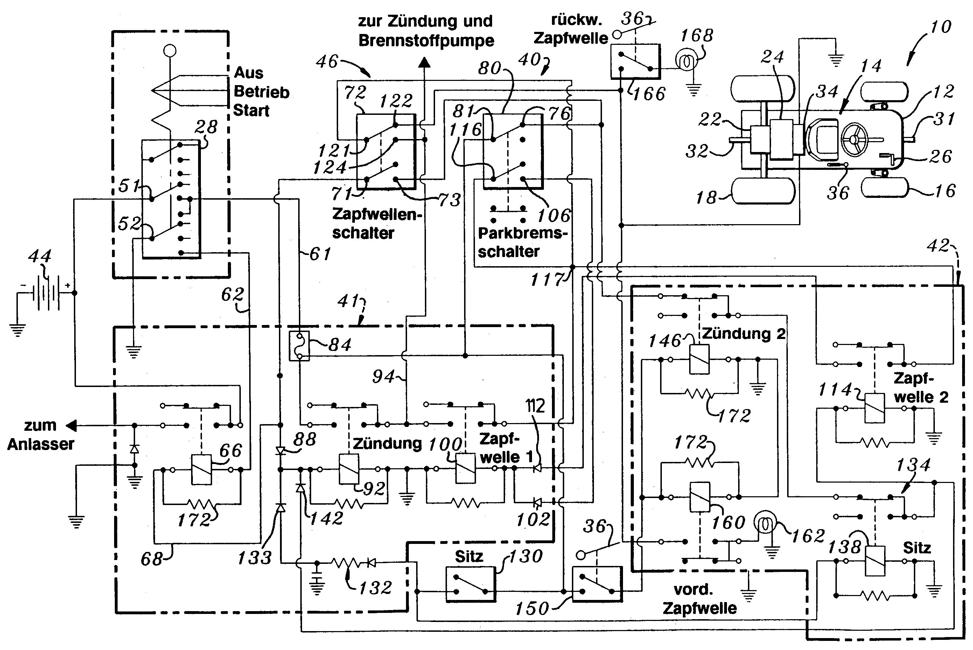

In der einzigen Zeichnung ist ein nachfolgend näher erläutertes Ausführungsbeispiel der Erfindung dargestellt.

Im einzelnen ist in der Zeichnung eine elektrische Verdrahtung für einen in der Rasen- und Landschaftspflege einsetzbaren Kleinschlepper 10 mit einem Rahmen 12 und einem Fahrerplatz 14 dargestellt. Zu dem Schlepper 10 gehören noch vordere lenkbare Laufräder 16 und rückwärtige antreibbare Laufräder 18, die über ein Getriebe 22 mit einem Motor 24 verbindbar sind. Das Getriebe ist über einen Schalthebel 26 betätigbar, der in eine Parkstellung verstellbar und am Fahrerplatz vorgesehen ist. In der Parkstellung befindet sich das Getriebe in seiner Neutralstellung und der Schlepper ist nicht mehr bewegbar. An dem Fahrerplatz 14 ist noch ein Zündschalter 28 vorgesehen.

Derartige Fahrzeuge oder Schlepper 10 sind in der Regel mit Vorrichtungen zum Antreiben von angebauten oder angehängten Geräten versehen, und beim Ausführungsbeispiel ist eine vordere oder eine erste Zapfwelle 31 und eine als Wahlausrüstung erhältliche rückwärtige oder zweite Zapfwelle 32 zum Antrieb nicht dargestellter Komponenten erkennbar. Eine elektrisch schaltbare Zapfwellenkupplung 34 verbindet die Zapfwellen 31 und 32 antriebsmäßig mit dem Motor 24, wozu ein Hebel 36 vorgesehen ist, über den die vordere oder rückwärtige oder beide Zapfwellen 31 und 32 einrückbar sind.

Diese Schlepper 10 sind außerdem noch mit Sicherheitseinrichtungen versehen, damit das Fahrzeug grundsätzlich nicht gefahren werden kann, wenn sich keine Bedienungsperson auf dem Fahrersitz befindet. Bei dem Ausführungsbeispiel wird dies durch einen Verriegelungskreis 40 sichergestellt, der ein erstes Modul 41 und ein zweites mit dem ersten Modul verknüpftes Modul 42 sowie eine Kraftquelle in Form einer Batterie 44 aufweist. Zu dem Verriegelungskreis 40 gehören ferner der Zündschalter 28 und verschiedene Schalter 46, die einzelnen Fahrzeugfunktionen, wie dem Betrieb einer Einspritzpumpe usw., zugeordnet sind. Der Zündschalter 28 ist an seiner einen Seite mit zwei Klemmen 51 und 52 ausgerüstet, von denen die erste an die Batterie 44 und die zweite an Masse angelegt ist. Der Zündschalter 28 kann wenigstens drei Stellungen einnehmen, und zwar eine Ausstellung (die obere und gezeigte), eine Betriebsstellung (die Mittelstellung) und eine Start- oder Anlaßstellung (die unterste Stellung). In der Betriebs- und Startstellung ist der Zündschalter 28 über seine erste Klemme 51 an eine Leitung 61 angeschlossen, und in der Startstellung ist die zweite Klemme 52 an eine Leitung 62 angeschlossen. Die Leitung 62 gehört zu einem Anlaßkreis und ist an die Spule eines Starterrelais 66 angeklemmt, so daß eine Klemme an die Masse angeschlossen ist, wenn sich der Zündschalter 28 in seiner Startstellung befindet. Die andere Seite der Spule des Starterrelais 66 ist an eine Leitung 68 angeklemmt, die zu den Funktionsschaltern 46 führt. Wird die Spule des Starterrelais 66 erregt, dann verbindet dessen Relaisschalter eine von der Batterie kommende Leitung mit dem Anlasser des Fahrzeugmotors 24. Aus dem Vorstehenden folgt, daß der Anlasser nur mit Strom versorgt wird oder der Motor angelassen werden kann, wenn die Leitung 68 mit der Batterie 44 verbunden ist, was im einzelnen nachfolgend noch geschildert wird, und der Zündschalter 28 in seine Startstellung bewegt wurde, in der die Leitung 62 an die Masse angeschlossen ist.

Die Starterrelaisleitung 68 ist an eine untere Klemme 71 eines Hauptschalters 72 für die Zapfwelle, der in den Ansprüchen als zweiter Schalter bezeichnet ist, angeschlossen, und die zugehörige Eingangsklemme 73 dieses Hauptschalters ist mit der Ausgangsklemme 76 eines in den Ansprüchen als erster Schalter bezeichneten Parkbremsschalters 80 verdrahtet. Dessen zugehörige Eingangsklemme 81 ist über eine Sicherung 84 mit der Leitung 61 verbunden. Sowohl der Hauptschalter 72 für die Zapfwelle als auch der Parkbremsschalter 80 können die in der Zeichnung erkennbaren Betriebsstellungen, in denen sich der Zapfwellenantrieb zuschalten läßt und die Parkbremse angelegt ist, und jeweils eine Ausstellung einnehmen, in denen die entsprechenden Schaltelemente aus ihrer gezeigten oberen Stellung nach unten verstellt wurden und in denen sich der Zapfwellenantrieb nicht zuschalten läßt und die Parkbremse nicht angelegt ist. Damit nun ein Stromfluß zu dem Anlasser erfolgen kann, müssen sich der Parkbremsschalter 80 in seiner dargestellten Betriebsstellung und der Hauptschalter 72 in seiner Ausstellung (untere Stellung) und der Zündschalter 28 in seiner Startstellung befinden. Damit besteht eine Strom führende Verbindung von der Batterie 44 über die erste Klemme 51, die Klemme 81 und die Klemme 76 des Parkbremsschalters 80, die Klemmen 73 und 71 im Hauptschalter 72 für die Zapfwelle und über die Leitung 68 zu der Spule des dann auch an Masse angelegten Starterrelais 66. Dieses wird erregt und schließt, so daß die Batterie 44 mit dem Anlasser verbunden wird. Ist die Parkbremse nicht angelegt oder befindet sich der Hauptschalter 72 in einer Stellung, in der der Antrieb einer Zapfwelle zugeschaltet werden kann, so ist ein Anlassen des Motors nicht möglich.

Eine Abzweigung der Leitung 68 (in den Ansprüchen dritter Steuerstromkreis) ist noch über eine Diode 88 mit der Spule eines in den Ansprüchen als erstes Relais bezeichneten Zündrelais 92 verbunden, die an ihrer anderen Seite geerdet ist. Bei Strom führender Leitung 68 kann damit auch die Spule des Zündrelais 66 erregt werden, wobei dessen Relaisschalter schließt und eine Verbindung zwischen der Sicherung 84 in der Leitung 61 mit einer Leitung 94 herstellt, die zu den Stromkreisen der Einspritz- und Brennstoffpumpen führt, die damit nur einsatzfähig sind, wenn das Zündrelais 92 geschlossen ist. Aus der Zeichnung ist ebenfalls noch erkennbar, daß die Sicherung 84 bzw. die Leitung 61 über einen Abzweig ebenfalls noch mit der Eingangsseite der Spule des Zündrelais 92 zur Bildung eines Haltekreises (in den Ansprüchen erster Steuerstromkreis) für das Zündrelais 92 verbunden ist.

Die Spule eines ersten Zapfwellenrelais 100 ist über eine Diode 102 an eine Ausgangsklemme 106 des Parkbremsschalters 80 und über eine Diode 112 an den Kontakt eines zweiten Zapfwellenrelais 114 angeschlossen, das in dem zweiten Modul 42 gelegen ist. Der andere Kontakt des zweiten Zapfwellenrelais 114 steht über eine Leitung 117 mit einer Eingangsklemme 116 des Parkbremsschalters 80, mit einer Klemme des ersten Zapfwellenrelais 100 und mit einer Klemme 121 des Hauptschalters 72 der Zapfwelle in Verbindung. Sobald das Fahrzeug 10 angesprungen ist, verstellt sich der Zündschalter 28 in seine Betriebsstellung, in der die Verbindung der Leitung 68 zur Masse unterbrochen ist. Infolge des an der Sicherung 84 vorgesehenen Abzweiges verbleibt jedoch das Zündrelais 92 bei einer auf dem Fahrersitz sitzenden Bedienungsperson in seiner erregten Stellung, und es erfolgt ein Stromfluß über die Leitung 94 zu einer Eingangsklemme 124 des sich noch in seiner Ausstellung befindlichen Hauptschalters 72 der Zapfwelle und damit zu der Klemme 121 in die Leitung 117. Wird nun noch der Parkbremsschalter 80 in seine Ausstellung verstellt, dann ist über die Diode 102 eine Verbindung zu der Spule des ersten Zapfwellenrelais 100 hergestellt, das damit aktiviert wird und schließt. Damit entsteht eine Strom führende Verbindung zwischen der Leitung 61 und der Leitung 117. Auch, wenn danach der Hauptschalter 72 der Zapfwelle in seine Betriebsstellung verstellt wird, wird das erste Zapfwellenrelais 100 in seiner erregten Stellung gehalten, da dann ein Haltekreis über die Leitung 117, die Klemmen 116 und 106 des sich in seiner Ausstellung befindlichen Parkbremsschalters 80 und die Diode 102 gebildet ist. Sobald das erste Zapfwellenrelais 100 deaktiviert ist, muß zum erneuten Aktivieren der Hauptschalter 72 in seine Ausstellung zurückgestellt werden.

Eine weitere Klemme 122 des Hauptschalters 72 ist an die Spule der Zapfwellenkupplung 34 angeschlossen, so daß, wenn sich der Hauptschalter 72 der Zapfwelle in seiner Betriebsstellung (wie dargestellt) befindet, ein Verbindung zwischen der Leitung 117 und der Spule der Zapfwellenkupplung 34 hergestellt ist. Diese Verbindung kann allerdings nur solange bestehen, wie das erste Zapfwellenrelais 100 erregt bleibt. Geht dieses aus irgendeinem Grund in seine inaktive Stellung, in der eine Stromzufuhr zur Leitung 117 unterbrochen ist, muß zum erneuten Aktivieren der Spule der Zapfwellenkupplung 34 der Hauptschalter 72 für die Zapfwelle in seine Ausstellung verstellt werden, wobei der Parkbremsschalter bei sich auf dem Fahrersitz befindlicher Bedienungsperson seine Ausstellung einzunehmen hat.

Sobald nämlich eine sich auf dem Fahrersitz befindliche Person diesen verläßt, stellt sich der Verbrennungsmotor automatisch ab. Hierzu ist ein normalerweise offener Sitzschalter 130 vorgesehen, der bei sich auf dem Fahrersitz befindlicher Bedienungsperson durch deren Gewicht geschlossen wird, dessen Eingangsklemme mit dem von der Sicherung 84 in der Leitung abgehenden Abzweig und dessen Ausgangsklemme über ein RC-Glied 132 und eine Diode 133 mit der Spule des Zündrelais 92 verbunden ist. Verläßt die Bedienungsperson bei sich in der Betriebsstellung befindlichen Zündschalter 28 das Fahrzeug für länger als eine halbe Sekunde, wird sich der Sitzschalter 130 öffnen und den Haltekreis für das Zündrelais 92 unterbrechen, wodurch die Stromzufuhr in die Leitung 94 unmittelbar unterbrochen wird. Damit stellt sich auch der Motor aus und ein Betrieb der Zapfwelle ist nicht mehr möglich. Andererseits ist es in manchen Fällen durchaus angebracht, einen Zapfwellenbetrieb - wenn auch begrenzt - zuzulassen, wenn sich die Bedienungsperson nicht auf dem Fahrersitz befindet, wozu ein den Sitzschalter überbrückender Übersteuerkreis 134 vorgesehen ist. Allerdings ist dies nur unter ganz bestimmten Voraussetzungen möglich, und zwar muß sich der Bremsschalter 80 in seiner Betriebsstellung befinden (Bremse angelegt) und der Hebel 36 für die Zapfwelle darf nur eine Stellung einnehmen, in der die rückwärtige Zapfwelle eingerückt ist. Unter solchen Bedingungen kann der Zapfwellenschalter 72 bei laufendem Motor und sich nicht auf dem Fahrersitz befindlicher Bedienungsperson seine Betriebsstellung einnehmen.

Der Übersteuerkreis 134 ist mit einem in den Ansprüchen als zweites Relais bezeichneten Sitzrelais 138 versehen, dessen Spule mit einer Seite an die Ausgangsseite des Sitzschalters 130 und mit der anderen Seite an Masse angeschlossen ist. Das Sitzrelais 138 ist derart angeordnet, daß seine eine Klemme über eine Diode 142 mit der Spule des Zündrelais 92 und seine andere Klemme mit der Ausgangsklemme eines zweiten und in den Ansprüchen als drittes Relais bezeichneten Zündrelais 146 verbunden ist. Die Eingangsklemme des zweiten Zündrelais 146 ist mit dem Ausgang 76 des Parkbremsschalters 80 derart verdrahtet, daß bei nicht aktiviertem Zündrelais 146 und nicht aktiviertem Sitzrelais 138 eine geschlossene Verbindung (in den Ansprüchen zweiter Steuerstromkreis des ersten Relais) von dem Parkbremsschalter 80 bzw. seiner Klemme 76 zu der Spule des ersten Zündrelais 92 besteht. Die Spule des zweiten Zündrelais 147 ist über einen normalerweise geschlossenen Schalter 150 für die vordere Zapfwelle 31 an die Leitung 61 angeschlossen, so daß bei geschlossenem Schalter 150 (d.h. der Hebel 36 befindet sich in einer Stellung, in der der Antrieb für die vordere Zapfwelle 31 eingeschaltet ist) das zweite Zündrelais 146 aktiviert, wobei sein Relaisschalter die Verbindung zwischen der Klemme 76 und dem Sitzrelais 138 unterbricht, und der Übersteuerkreis 134 unterbrochen wird. Der Übersteuerkreis 134 wird ebenfalls unterbrochen, wenn der Sitzschalter 130 seine geschlossene Stellung einnimmt.

Ist der Sitzschalter 130 dagegen offen und ebenfalls der Schalter 150 für die vordere Zapfwelle 31, dann befinden sich das Sitzrelais 138 und das zweite Zündrelais 146 in ihren aus der Zeichnung ersichtlichen Stellungen, in denen bei sich in seiner Betriebsstellung befindlichem Bremsschalter 80 eine geschlossene Verbindung von der Klemme 76 zu der Spule des ersten Zündrelais 92 besteht. Damit kann bei sich in seiner Betriebsstellung befindlichem Zündschalter 28 das erste Zündrelais 92 in einer Stellung verbleiben, in der die Leitung 94 Strom führend und der Motor des Fahrzeuges antreibbar ist, auch wenn sich keine Bedienungsperson auf dem Fahrersitz befindet. Wird dagegen der Bremsschalter 80 aus seiner Brems- oder Betriebsstellung in seine Ausstellung oder der Hebel 36 in eine Stellung verstellt, in der die vordere Zapfwelle 31 antreibbar und der Schalter 150 geschlossen ist, dann öffnet der Übersteuerkreis 134 sofort und der Motor stellt sich als Folge unmittelbar ab. Damit ist auch kein Antrieb für die rückwärtige Zapfwelle 32 mehr möglich.

Ein logisches Richtungsrelais 160, das zwischen den Schalter 150 und einer Anzeige für die vordere Zapfwelle 31 geschaltet ist, ist mit einer Spule versehen, die aktiviert wird, wenn sich der Hebel 36 in einer Stellung befindet, in der die vordere Zapfwelle 31 antreibbar ist. Wenn der Schalter 150 geschlossen ist, aktiviert das Relais 160 die Anzeige 162, um die Bedienungsperson darüber zu informieren, daß sich der Hebel 36 in einer Stellung für den Antrieb der vorderen Zapfwelle 31 befindet. Für die rückwärtige Zapfwelle 32 ist ebenfalls ein über den Hebel 36 betätigbarer Schalter 166 vorgesehen, der zwischen die Klemme 122 des Hauptschalters 72 für die Zapfwelle und einer Anzeige 168 für die rückwärtige Zapfwelle 32 geschaltet ist. Der Schalter 166 wird geschlossen, wenn sich der Hebel 36 in einer Stellung befindet, in der die rückwärtige Zapfwelle 32 antreibbar ist. In einem solchen Fall gibt die Anzeige 168 der Bedienungsperson ein entsprechendes Signal. Parallel geschaltete Widerstände 178 sind noch zwischen den Ein- und Ausgängen der Spulen der einzelnen Relais vorgesehen.

Um mit dem Fahrzeug im normalen Arbeitseinsatz arbeiten zu können, besteigt der Fahrer zunächst den Fahrerplatz des noch nicht angelassenen Fahrzeuges. Dabei wird der Sitzschalter 130 durch das Gewicht des Fahrers geschlossen. Der Zündschalter 28 wird in die Startstellung gestellt, wobei die Spule des Starterrelais 66 an Masse angelegt wird. Befindet sich dann auch der Getriebeschalthebel 26 in seiner Parkstellung, in der der Parkbremsschalter 80 seine Betriebsstellung einnimmt und mit dem Fahrzeug nicht gefahren werden kann, und der Hauptschalter 72 der Zapfwelle in seiner Ausstellung, so kann das Fahrzeug angelassen werden, da damit eine Strom führende Verbindung von der Leitung 61 über die Klemmen 81, 76 und 73, 71 zu der Spule des Starterrelais 66 geschaltet ist. Das Starterrelais 66 zieht an und der Anlasser wird mit Strom versorgt. Gleichzeitig wird das Zündrelais 92 aktiviert, so daß über die Leitung 94 die Zündspule und die Brennstoffpumpe mit Strom versorgt werden, so daß der Motor anspringen kann. Wird nun noch der Bremsschalter 80 aus seiner Betriebsstellung in seine Ausstellung verstellt, dann kann auch das erste Zapfwellenrelais 100 aktiviert werden, und zwar von der Leitung 94 aus über die Klemmen 124, 121, die Leitung 117, die Klemmen 116, 106 des Bremsschalters 80 und die Diode 102.

Bei laufendem Motor und sich auf dem Fahrersitz befindlicher Bedienungsperson kann danach der Hauptschalter 72 der Zapfwelle in seine Betriebsstellung verstellt werden, um entweder eine Zapfwelle oder beide Zapfwellen antreiben zu können. In der in der Zeichnung dargestellten Betriebsstellung des Hauptschalters 72 wird die Spule oder werden die Spulen der Zapfwellen erregt und die Zapfwellenkupplung 34 eingerückt, um die an die Zapfwelle oder Zapfwellen angeschlossenen Arbeitsgeräte antreiben zu können. Solange der Sitzschalter 130 bei sich in seiner Betriebsstellung befindlichem Zündschalter 28 in seiner Schließstellung verbleibt, bleibt das Zündrelais 92 aktiviert, so daß der Motor laufen kann. Um den Fahrersitz für mehr als einen Bruchteil einer Sekunde verlassen zu können, ohne daß der Motor ausgeht, schaltet der Fahrer den Bremsschalter 80 wieder in seine Betriebsstellung und den Hauptschalter 72 der Zapfwelle in seine Ausstellung, wodurch eine Strom führende Verbindung von der Leitung 61 über die Klemmen 81, 76 und 73, 71 entsteht, um das Zündrelais 92 weiter aktivieren zu können, sobald sich der Sitzschalter 130 nach Verlassen des Sitzes öffnet. Sobald der Sitzschalter 130 sich öffnet, wird das Sitzrelais 138 deaktiviert und es entsteht eine geschlossene Verbindung zwischen dem ersten und dem zweiten Zündrelais 92 und 146. Wird nun noch über den Hebel 36 der Antrieb für die vordere Zapfwelle 31 unterbrochen, so öffnet der Schalter 150 für die vordere Zapfwelle 31 und das zweite Zündrelais 146 wird deaktiviert und der Kreislauf zwischen der Klemme 81 des Bremsschalters 80 und der Spule des ersten Zündrelais 92 wird geschlossen. Das Zündrelais 92 bleibt aktiviert und auch die Spule des zweiten Zapfwellenrelais 114, auch wenn der Hauptschalter 72 der Zapfwelle wieder in seine Betriebsstellung verstellt wird. Bevor dies aber erfolgt, wird zunächst noch die Spule des ersten Zapfwellenrelais 100 mit Strom von der Leitung 94 über die Klemmen 124, 121, die Leitung 117, das aktivierte zweite Zapfwellenrelais 114 und über die Diode 112 versorgt. Nach Verstellung des Hauptschalters 72 in seine Betriebsstellung wird das erste Zapfwellenrelais 100 in seiner aktivierten Stellung gehalten, da durch die Verbindung der Leitung 61 mit der Leitung 117 eine Halteschleife gebildet wird. Um nun die rückwärtige Zapfwelle 32 einrücken zu können, wird der Hebel 36 in seine Stellung verstellt, in der nur der Antrieb der rückwärtigen Zapfwelle 32 möglich ist, und der Hauptschalter 72 der Zapfwelle in seine Betriebsstellung. Wird nun aus irgendeinem Grund das Getriebe aus seiner Parkstellung verstellt oder die vordere Zapfwelle 31 eingerückt, solange sich der Fahrer nicht auf seinem Sitz befindet, wird der Stromfluß zu dem ersten Zündrelais 92 und den zweiten Zapfwellenrelais 114 sofort unterbrochen, wodurch der Motor sich abschaltet und die Zapfwellenkupplung 34 ausgerückt wird.

## Patentansprüche

1. Antreibbares Fahrzeug mit einer elektrisch einrückbaren Kupplung (34) zum Einschalten mindestens eines vom Fahrzeugmotor (24) aus antreibbaren Abtriebes (31 bzw. 32), einer Stromquelle (44) und mit einem Stromquelle (44) und Kupplung (34) miteinander verbindenden Verriegelungskreis (40), wobei der Verriegelungskreis (40) einen Sicherheitsschalter (130), der bei Abwesenheit eines Fahrers öffnet und den Fahrzeugmotor (24) selbsttätig ausschaltet, einem zwischen einer Betriebs- und einer Ausstellung verstellbaren ersten Schalter (80), der in seiner Betriebsstellung einen Fahrbetrieb unterbindet, einen zweiten zwischen einer Betriebsstellung und einer Ausstellung verstellbaren Schalter (72), der in seiner Betriebsstellung eine Stromversorgung der elektrisch einrückbaren Kupplung (34) erlaubt, und mindestens einen Relaisschalter aufweist, dadurch gekennzeichnet, daß an die Kupplung (34) ein zweiter Abtrieb (31) angeschlossen ist und daß in den Verriegelungskreis (40) ein Modul (42) integriert ist, wobei die Verdrahtung derart ist, daß bei sich in seiner Betriebsstellung befindlichem ersten Schalter (80) und abgeschaltetem zweiten Antrieb (31) und offenem Sicherheitsschalter (130) der Sicherheitsschalter (130) überbrückt wird, so daß der Fahrzeugmotor (24) weiter läuft, und daß für einen Betrieb des ersten Abtriebes (32) bei offenem Sicherheitsschalter (130) der zweite Schalter (72) zuerst in seine Ausstellung und danach in seine Betriebsstellung verstellt wird.

2. Fahrzeug nach Anspruch 1 mit einem Zündstromkreis, dessen Primärkreis den ersten und den zweiten Schalter (80, 72), den Sicherheitsschalter (130) und ein erstes elektromagnetisches Relais (92) aufweist, dadurch gekennzeichnet, daß der Sicherheitsschalter (130) in dem Steuerstromkreis des ersten Relais (92) vorgesehen ist, das einen zweiten den Sicherheitsschalter (130) überbrückenden Steuerstromkreis aufweist.

3. Fahrzeug nach Anspruch 2, dadurch gekennzeichnet, daß der zweite Steuerstromkreis mit einem zweiten Relais (138) versehen ist, das bei Anwesenheit des Fahrers den zweiten Steuerstromkreis des ersten Relais (92) unterbricht und dessen Steuerstromkreis stromabwärts des Sicherheitsschalters (130) an den ersten Steuerstromkreis des ersten Relais (92) angeschlossen ist.

4. Fahrzeug nach einem oder mehreren der vorherigen Ansprüche, dadurch gekennzeichnet, daß der Sicherheitsschalter (130) als einpoliger Sitzschalter ausgebildet ist, dessen Ausgang mit dem Steuerstromkreis des zweiten Relais (138) verbunden ist.

5. Fahrzeug nach Anspruch 1, dadurch gekennzeichnet, daß der erste und der zweite Abtrieb (31, 32) über einen Hebel (36) wahlweise einrückbar sind.

6. Fahrzeug nach Anspruch 2, dadurch gekennzeichnet, daß der erste Schalter als Bremsschalter (80) ausgebildet ist und daß der zweite Steuerstromkreis des ersten Relais (92) nur in der Betriebsstellung des ersten Schalters (80) Strom führend ist.

7. Fahrzeug nach Anspruch 5, dadurch gekennzeichnet, daß dem Hebel (36) zum Einrücken des zweiten Abtriebes (31) ein Schalter (150) zugeordnet ist, der im eingerückten Zustand den zweiten Steuerstromkreis des ersten Relais (92) unterbricht.

8. Fahrzeug nach Anspruch 7, dadurch gekennzeichnet, daß im zweiten Steuerstromkreis für das erste Relais (92) ein drittes Relais (146) vorgesehen ist, dessen Steuerstromkreis an den über den Hebel (36) betätigbaren Schalter (150) angeschlossen ist.

9. Fahrzeug nach einem oder mehreren der vorherigen Ansprüche, dadurch gekennzeichnet, daß das erste Relais (92) einen dritten Steuerstromkreis aufweist, der nur Strom führend ist, wenn sich der erste Schalter (80) in seiner Betriebsstellung und der zweite Schalter (72) in seiner Ausstellung befindet.

## Claims

1. A motor vehicle with an electrically engageable clutch (34) for engaging at least one drive (31 or 32) which can be driven from the vehicle engine (24), a current source (44) and an interlock circuit (40) connecting the current source (44) and the clutch (34) together, wherein the interlock circuit (40) comprises a safety switch (130) which opens in the absence of the driver and automatically switches off the vehicle engine (24), a first switch (80) which can be shifted between an operating position and an off position and which, in its operating position, prevents the vehicle being driven, a second switch (72) which can be shifted between an operating position and an off position and which allows current supply to the electrically engageable clutch (34) in its operating position, and at least one relay switch, characterized in that a second drive (31) is connected to the clutch (34) and in that a module (42) is integrated into the interlock circuit (40), the wiring being such that, with the first switch (80) in its operating position and the second drive (31) switched off and the safety switch (130) open, the safety switch (130) is bridged, so that the vehicle engine (24) still runs, and in that the second switch (72) is adjusted firstly into its off position and then into its operating position for operation of the first drive (32) with the safety switch (130) open.

2. A vehicle according to claim 1, with an ignition circuit whose primary circuit comprises the first and second switches (80, 72), the safety switch (130) and a first electromagnetic relay (92), characterized in that the safety switch (130) is provided in the control current circuit of the first relay (92), which has a second control current circuit bridging the safety switch (130).

3. A vehicle according to claim 2, characterized in that the second control current circuit is provided with a second relay (138) which interrupts the control current circuit of the first relay (92) in the absence of the driver and whose control current circuit is connected downstream of the safety switch (130) to the first control current circuit of the first relay (92).

4. A vehicle according to one or more of the preceding claims, characterized in that the safety switch (130) is in the form of a single pole seat switch, whose output is connected to the control current circuit of the second relay (138).

5. A vehicle according to claim 1, characterized in that the first and the second drives (31, 32) can be selectively engaged by a lever (36).

6. A vehicle according to claim 2, characterized in that the first switch is in the form of a brake switch (80) and in that the second control current circuit of the first relay (92) only passes current in the operating position of the first switch (80).

7. A vehicle according to claim 5, characterized in that a switch (150) is associated with the lever (36) for engaging the second drive (31) and interrupts the second control current circuit of the first relay (92) in the engaged state.

8. A vehicle according to claim 7, characterized in that a third relay (146) is provided in the second control current circuit for the first relay (92), with its control current circuit connected to the switch (150) operable by the lever (36).

9. A vehicle according to one or more of the preceding claims, characterized in that the first relay (92) has a third control current circuit, which only passes current when the first switch (80) is in its operating position and the second switch (72) is in its off position.

## Revendications

1. Véhicule motorisé comportant un embrayage (34) pouvant être enclenché électriquement et servant à activer au moins un dispositif mené (31 ou 32), qui peut être entraîné à partir du moteur (24) du véhicule, une source de courant (44) et un circuit de verrouillage (40) qui relient entre eux la source de courant (44) et l'embrayage (34), et dans lequel le circuit de verrouillage (40) comporte un interrupteur de sécurité (130) qui s'ouvre en l'absence d'un conducteur et arrête automatiquement le moteur (24) du véhicule, un premier interrupteur (80) pouvant être déplacé entre une position de fonctionnement et une position ouverte et qui, dans sa position de fonctionnement, interrompt le fonctionnement du véhicule, un second interrupteur (72) déplaçable entre une position de fonctionnement et une position ouverte et qui, dans sa position de fonctionnement, permet une alimentation en courant de l'embrayage (34) pouvant être enclenché électriquement, et au moins un interrupteur à relais, caractérisé en ce qu'un second dispositif mené (31) est raccordé à l'embrayage (34) et un module (42) est intégré dans le circuit de verrouillage (40), le câblage étant tel que, lorsque le premier interrupteur (80) est situé dans sa position de fonctionnement et que le second dispositif mené (31) est débranché et que l'interrupteur de sécurité (130) est ouvert, l'interrupteur de sécurité (130) est shunté de sorte que le moteur (24) du véhicule continue à tourner et que pour un fonctionnement du premier dispositif mené (32), lorsque l'interrupteur de sécurité (130) est ouvert, le second interrupteur (72) est tout d'abord amené dans sa position ouverte, puis dans sa position de fonctionnement.

2. Véhicule selon la revendication 1, comportant un circuit d'allumage dont le circuit primaire possède des premier et second interrupteurs (80,72), l'interrupteur de sécurité (130) et un premier relais électromagnétique (92), caractérisé en ce que l'interrupteur de sécurité (130) est prévu dans le circuit de commande du premier relais (92), qui possède un second circuit de courant qui shunte l'interrupteur de sécurité (130).

3. Véhicule selon la revendication 2, caractérisé en ce que le second circuit de commande est équipé d'un second relais (138), qui, dans le cas de la présence du conducteur, interrompt le second circuit de commande du premier relais (92) et dont le circuit de commande est raccordé, en amont de l'interrupteur de sécurité (130), au premier circuit de commande du premier relais (92).

4. Véhicule selon une ou plusieurs des revendications précédentes, caractérisé en ce que l'interrupteur de sécurité (130) est agencé sous la forme d'un interrupteur unipolaire de siège, dont la sortie est reliée au circuit de commande du second relais (138).

5. Véhicule selon la revendication 1, caractérisé en ce que les premier et second dispositifs menés (31,32) peuvent être enclenchés au choix par l'intermédiaire d'un levier (36).

6. Véhicule selon la revendication 2, caractérisé en ce que le premier interrupteur est agencé sous la forme d'un interrupteur de frein (80) et que le second circuit de commande du premier relais (92) véhicule un courant uniquement lorsque le premier interrupteur (80) est dans la position de fonctionnement.

7. Véhicule selon la revendication 5, caractérisé en ce qu'au levier (36), pour l'enclenchement du second dispositif mené (31) est associé, un interrupteur (150), qui, à l'état fermé, interrompt le second circuit de commande du premier relais (92).

8. Véhicule selon la revendication 7, caractérisé en ce que dans le second circuit de commande pour le premier relais (92) est prévu un troisième relais (146), dont le circuit de commande est raccordé à l'interrupteur (150) pouvant être actionné par l'intermédiaire du levier (36).

9. Véhicule selon une ou plusieurs des revendications précédentes, caractérisé en ce que le premier relais (92) possède un troisième circuit de commande, qui véhicule le courant uniquement lorsque le premier interrupteur (80) est situé dans sa position de fonctionnement et que le second interrupteur (72) est situé dans sa position ouverte.
